# EUROPÄISCHE PATENTSCHRIFT

(11) **EP 2 696 045 B1**
(45) Veröffentlichungstag und Bekanntmachung des Hinweises auf die Patenterteilung: **12.04.2017**
(21) Anmeldenummer: 13167820.3
(22) Anmeldetag: 15.05.2013
(51) Int. Cl.: F01M 11/03, F01M 11/10, F16H 57/04

(54) **Vorrichtung zur Überwachung eines Hydraulikmediums**
Device for monitoring a hydraulic medium
Dispositif destiné à la surveillance d'un fluide hydraulique

(30) Priorität: 06.08.2012 DE 102012015367
(43) Veröffentlichungstag der Anmeldung: 12.02.2014
(73) Patentinhaber: CLAAS Selbstfahrende Erntemaschinen GmbH, 33428 Harsewinkel (DE)
(72) Erfinder: Dückingaus, Heinrich, 33649 Bielefeld (DE); Buhr, Jens, 48493 Wettringen (DE); Nagelsmöller, Heiko, 33292 Borgholzhausen (DE); Strieker, Norbert, 33415 Verl (DE)

(56) Entgegenhaltungen:
- EP-A2- 0 159 094
- DE-A1- 2 115 260
- GB-A- 1 256 291
- US-A- 5 402 113
- US-A- 5 696 331

## Beschreibung

Die vorliegende Erfindung betrifft eine Vorrichtung zur Überwachung der Qualität eines in einem Hydraulikaggregat zirkulierenden Hydraulikmediums sowie ein Hydraulikaggregat, in dem eine solche Vorrichtung verwendet wird.

Wenn ein Hydraulikmedium in einem Hydraulikaggregat umgewälzt wird, entsteht durch die Bewegung von Teilen des Aggregats gegeneinander Abrieb, der von dem Hydraulikmedium mitgespült wird. Damit sich dieser Abrieb nicht an Orten des Aggregats absetzt, wo er Schäden verursachen kann, umfasst ein solches Hydraulikaggregat herkömmlicherweise einen Filter, durch den das Hydraulikfluid zirkuliert und der von dem Hydraulikfluid mitgeführte Abriebpartikel abfängt.

Aus DE 100 25 690 A1 ist eine Vorrichtung zur Überwachung der Ölqualität in einem Kraftfahrzeug-Automatikgetriebe bekannt, bei der ein Sensorelement zwei siebförmige, von dem zu überwachenden Öl durchströmte Membranen und ein zwischen diesen Membranen angeordnetes Filtervlies umfasst. Die beiden Membranen bilden einen Kondensator, dessen Kapazität von der dielektrischen Permittivität des zwischen den Sensormembranen enthaltenen Öls und damit von dessen Belastung mit metallischem Abrieb abhängt. Da zwischen den zwei Sensormembranen das Filtervlies Platz finden muss und darüber hinaus der Abstand der Sensormembranen vom Filtervlies groß genug sein muss, um die Entstehung von elektrisch leitfähigen Brücken zwischen den Sensormembranen und dem Filtervlies durch Abriebspäne sicher zu verhindern, muss der Abstand zwischen den beiden Sensormembranen beträchtlich sein. Um trotz dieses beträchtlichen Abstands dem von den zwei Sensormembranen gebildeten Kondensator eine für eine präzise Messung ausreichende Kapazität zu verleihen, müssen die zwei Sensormembranen eine beträchtliche Fläche aufweisen. Dies macht die herkömmliche Vorrichtung insgesamt sperrig. Da für eine Kapazitätsmessung der Zwischenraum zwischen den Sensormembranen vollständig mit Öl gefüllt sein muss, bindet die herkömmliche Vorrichtung eine beträchtliche Menge Öl und führt so zu einer Erhöhung der Ölfüllmenge eines mit dieser Vorrichtung ausgestatteten Getriebes. Darüber hinaus ist die Empfindlichkeit dieser herkömmlichen Vorrichtung stark nichtlinear. Ein einzelner metallischer Abriebspan, der von der Filtermembran aufgefangen worden ist, schließt in seiner Umgebung das elektrische Feld des Kondensators kurz und hat dadurch einen beträchtlichen Einfluss auf die von der Vorrichtung erfasste Kapazität. Ein zweiter Abriebspan, der sich in unmittelbarer Nähe des ersten absetzt und durch diesen weitgehend von dem elektrischen Feld abgeschirmt ist, beeinflusst die Kapazitätsmessung demgegenüber nur wenig. Dies macht es schwierig, sicher zu erfassen, wann eine kritische Belastung des Öls mit metallischem Abrieb tatsächlich erreicht ist.

Aus US 5 402 113 A ist eine weitere Vorrichtung zur Überwachung der Ölqualität bekannt. Eine Aufgabe der vorliegenden Erfindung ist, eine Vorrichtung zur Überwachung der Qualität eines Hydraulikmediums zu schaffen, die in kompakter Form realisierbar ist und deren Betrieb nur eine minimale Menge des Hydraulikmediums bindet.

Die Aufgabe wird gelöst, indem bei einer Vorrichtung zur Überwachung der Qualität eines Hydraulikmediums mit einem das Hydraulikmedium führenden Kanal und einer in dem Kanal angeordneten Sensormembran, die wenigstens einen von in dem Kanal zirkulierendem Hydraulikmedium durchströmten Durchgang aufweist, die Membran den Durchgang begrenzende, mit unterschiedlichen elektrischen Potential beschaltbare Elektroden umfasst.

Der Platzbedarf einer solchen einzelnen Membran ist gegenüber den herkömmlichen Plattenkondensatoraufbau vernachlässigbar. Der Abstand zwischen den Elektroden kann klein gemacht werden, da kein Filtervlies zwischen ihnen Platz finden muss.

Um einen übermäßigen Stau des Hydraulikmediums an der Sensormembran zu verhindern, sollte der Abstand zwischen dem Elektrode am Durchgang wenigstens 0,3 mm betragen.

Ferner ist bevorzugt, dass der Abstand nicht mehr als 1,5 mm beträgt, um die Möglichkeit zu schaffen, dass hinreichend große Abriebpartikel am Durchgang wenigstens zeitweilig hängen bleiben und eine leitende Verbindung zwischen den Elektroden herstellen, die messtechnisch nachweisbar ist.

Um auf einer begrenzten Querschnittsfläche des Kanals bei geringem Abstand zwischen den Elektroden eine ausreichende freie Querschnittsfläche für den Durchtritt des Hydraulikfluids zu schaffen, ist bevorzugt, dass der Durchgang spaltförmig ist, insbesondere mit einem wellen- oder mäanderförmigen Velauf.

Wenigstens eine der Elektroden weist vorzugsweise eine kammartige Struktur mit einer Mehrzahl von sich beabstandet nebeneinander erstreckenden Elektrodenfingern auf. Wenn zwischen je zwei Elektrodenfingern dieser einen Elektrode die zweite Elektrode oder ein Elektrodenfinger der zweiten Elektrode eingreift, kann eine beträchtliche Spaltlänge und damit eine große freie Querschnittsfläche auf einem kompakten Kanalquerschnitt untergebracht werden.

Die Elektrodenfinger dieser einen Elektrode können mit einem Verteilersteg elektrisch leitend und insbesondere einteilig verbunden sein. So können die Elektrodenfinger und der Verteilersteg beispielsweise aus einem dünnen Blech ausgestanzt oder geschnitten sein.

Die Elektrodenfinger, vorzugsweise die der zweiten Elektrode, können mit einem Verteilersteg jeweils über einen Vorwiderstand verbunden sein. Die Vorwiderstände haben die Wirkung, dass ein einzelner einen Spalt überbrückender Abriebspan nicht die gesamten Elektroden, sondern jeweils nur über einen gleichen Vorwiderstand versorgte Finger miteinander kurzschließen kann, so dass, wenn sich ein weiterer Span an einem weiteren, über einen anderen Vorwiderstand versorgten Elektrodenfinger absetzt, dies am Stromfluss zwischen den Elektroden nachweisbar ist. Der Vorwiderstand sollte einen Widerstandswert von wenigstens 1 kΩ aufweisen, um mit ausreichender Sicherheit höher zu sein als der Widerstandswert eines zwei Elektrodenfinger verbindenden Span, aber vorzugsweise von weniger als 100 kΩ, um einen einfach und sicher nachweisbaren Stromfluss zwischen den Elektrodenfingern zu ermöglichen, wenn die angelegte Spannung in einem für eine Fahrzeugbatterie typischen Spannungsbereich von wenigen 10 V liegt.

Um eine große Zahl von überbrückenden Spänen an einer Vielzahl von Durchgängen nachweisen zu können, sollte auch die Zahl der Vorwiderstände groß und insbesondere größer als 3 sein.

Um die kammartige Struktur zu bilden, sind die Elektrodenfinger jeweils an einem ersten Ende mit dem Verteilersteg verbunden. Ein vom Verteilersteg abgewandtes zweites Ende der Elektrodenfinger sollte an einer Fassung der Sensormembran fixiert sein, um sicherzustellen, dass die Elektrodenfinger unter dem Druck des Hydraulikfluids nicht ausgelenkt werden und dadurch in Kontakt miteinander gelangen oder Späne durch eine Bewegung der Elektrodenfinger daran gehindert werden, an ihnen hängen zu bleiben.

Vorzugsweise umfasst die Fassung der Sensormembran einen elektrisch isolierenden Trägerring, durch den hindurch der Kanal verläuft und an dem erste und/oder zweite Enden der Elektrodenfinger fixiert sind.

Bestandteil der erfindungsgemäßen Vorrichtung ist ferner vorzugsweise auch eine Spannungsquelle zum Anlegen einer Betriebsspannung an die Sensormembran und eine Messschaltung zum Erfassen eines Stromflusses über die Sensormembran.

Diese Messschaltung kann eingerichtet sein, ein Warnsignal zu erzeugen, wenn der Stromfluss über die Membran einen Grenzwert übersteigt, d.h. wenn eine vorgegebene Zahl von Durchgängen durch die an sie angrenzenden Elektroden berührende Abriebspäne überbrückt sind.

Es kommt nicht selten vor, dass ein Span, der sich zunächst an einem Durchgang der Sensormembran abgesetzt und dabei eine Verbindung zwischen den Elektroden hergestellt hat, im Laufe der Zeit vom Hydraulikfluid durch den Durchgang hindurchgespült wird und dann anhand des Stromflusses über die Sensormembran nicht mehr nachweisbar ist. Dieser Tatsache kann Rechnung getragen werden, indem die Messschaltung eingerichtet ist, Anstiege des Stromflusses über die Membran zu zählen und ein Warnsignal zu erzeugen, wenn dieser Zählwert einen Grenzwert übersteigt.

Vorzugsweise weist die Vorrichtung einen stromabwärts von der Sensormembran angeordneten Partikelfilter auf, um Partikel, die die Sensormembran passiert haben, abzufangen und von Komponenten des hydraulischen Aggregats fernzuhalten, die durch sie beschädigt werden könnten.

Ein Gehäuse, in dem die Sensormembran untergebracht ist, weist vorzugsweise einen Deckel auf, über den wenigstens eine stromaufwärtige Seite der Sensormembran zugänglich ist, um gegebenenfalls von der Sensormembran aufgefangene Partikel entfernen zu können.

Gegenstand der Erfindung ist auch das hydraulische Aggregat selber, das die oben beschriebene Vorrichtung verwendet. Ein solches Aggregat kann insbesondere eine Pumpe und einen von der Pumpe angetriebene Hydraulikmotor umfassen, wobei die oben beschriebene Vorrichtung zur Überwachung der Qualität dese Hydraulikmediums in einem die Pumpe mit dem Hydraulikmotor verbindenden Hydraulikkreis angeordnet ist.

Vorzugsweise ist die Vorrichtung in einer Leckölleitung der Pumpe und/oder des Hydraulikmotors angeordnet.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein Blockdiagramm eines erfindungsgemäßen hydraulischen Aggregats;
- Fig. 2: eine Draufsicht auf eine Sensormembran einer Ölqualitäts-Überwachungsvorrichtung des hydraulischen Aggregats aus Fig. 1;
- Fig. 3: einen Schnitt durch die Sensormembran entlang der Ebene III-III aus Fig. 2;
- Fig. 4: einen exemplarischen zeitlichen Verlauf einer an der Sensormembran der Fig. 2 gemessenen Stromstärke;
- Fig. 5: eine Draufsicht auf eine Sensormembran gemäß einer zweiten Ausgestaltung der Erfindung; und
- Fig. 6: einen schematischen Schnitt durch das Filtergehäuse der ÖlqualitätsÜberwachungsvorrichtung.

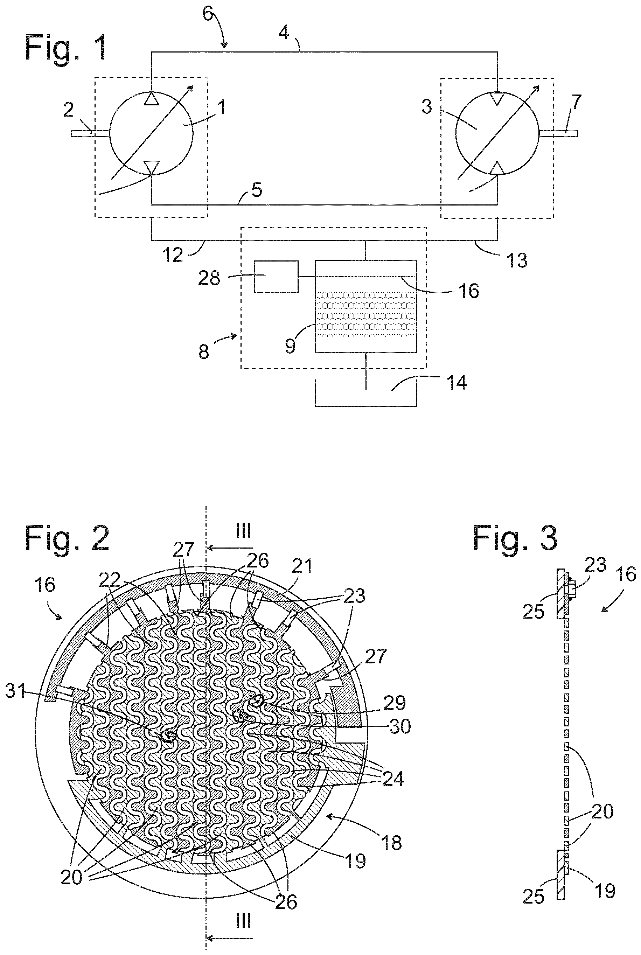

Fig. 1 zeigt ein Blockdiagramm eines erfindungsgemäßen hydraulischen Aggregats. Das Aggregat, das z.B. zum Antreiben eines Fahrwerks in einem landwirtschaftlichen Fahrzeug wie etwa einem Mähdrescher, einem Feldhäcksler oder dergleichen eingesetzt sein kann, umfasst eine über eine Welle 2 mit einem nicht dargestellten Verbrennungsmotor verbundene Pumpe 1 und einen Hydraulikmotor 3, der mit der Pumpe 1 über einen zwei Ölleitungen 4, 5 umfassenden Hydraulikkreis 6 verbunden ist und über eine Welle 7 nicht dargestellte Räder einer landwirtschaftlichen Maschine antreibt. Der Hydraulikkreis 6 umfasst ferner Leckölleitungen 12, 13, die in an sich bekannter Weise Lecköl von der Pumpe 1 bzw. dem Hydraulikmotor 3 einem Tank 14 zuführen, sowie eine in der Figur nicht dargestellte Ölpumpe, die Öl aus den Tank 14 in eine der Leitungen 4, 5 zurückspeist, um die Leckölverluste der Pumpe 1 und des Motors 3 auszugleichen.

Eine Vorrichtung 8 zur Überwachung der Qualität des in dem Hydraulikkreis 6 zirkulierenden Öls umfasst ein Filtergehäuse 9 mit einem Einlassanschluss 10 und einem Auslassanschluss 11.

In der Darstellung der Fig. 1 ist eine einzige Vorrichtung 8 in einem gemeinsamen Abschnitt der Leckölleitungen 12, 13 angeordnet, um von dem Lecköl aus der Pumpe 1 bzw. dem Hydraulikmotor 3 herausgespülte Partikel aufzufangen. Alternativ könnten die Leckölleitungen 12, 13 auch getrennt voneinander in den Tank 14 münden, und je eine Vorrichtung 8 könnte in jeder Leckölleitung 12, 13 vorgesehen sein. So könnten in der Vorrichtung 8 der Leckölleitung 12 aufgefangene Partikel einem Ursprung in der Pumpe 1 und von der Vorrichtung 8 der Leckölleitung 13 aufgefangene Partikel einem Ursprung in dem Hydraulikmotor 3 zugeordnet werden.

Alternativ oder ergänzend kann eine Vorrichtung 8 auch in der Ölleitung 4 und/oder 5 oder parallel zu den Leitungen 4, 5 angeordnet sein, um Partikel aus dem zwischen Pumpe 1 und Motor 3 zirkulierenden Ölstrom abzufangen.

Öl, das über den Einlassanschluss 10 in das Filtergehäuse 9 der Vorrichtung 8 eintritt, passiert zunächst eine ebene Sensormembran 16, die wie im Folgenden genauer beschrieben, eine Vielzahl von Durchgängen aufweist, und anschließend einen Filterkörper 17, der vorgesehen ist, um metallische Abriebpartikel aus dem Ölstrom abzufangen, die beim Betrieb der Pumpe 1 und des Hydraulikmotors 3 in diesen entstehen und die zu fein sind, um an der Sensormembran 16 hängenzubleiben.

Fig. 2 zeigt eine Draufsicht auf die Sensormembran 16. Passend zu einer im Wesentlichen zylindrischen Form des Filtergehäuses 9 ist die Sensormembran 16 hier kreisrund dargestellt, doch liegt auf der Hand, dass andere Querschnittsformen ebenfalls in Betracht kommen. Um den Aufbau der Sensormembran 16 zu verdeutlichen, wird auch auf Fig. 3 Bezug genommen, die einen Querschnitt durch die Sensormembran 16 entlang der Ebene III-III aus Fig. 2 zeigt. Die Sensormembran 16 umfasst mehrere elektrisch leitende Teile, die sämtlich aus einem gleichen Stück Flachmaterial, z.B. durch Ausstanzen, Wasserstrahlschneiden, Laserschneiden oder dergleichen gefertigt sind. Eines dieser Teile, mit 18 bezeichnet, umfasst einen hier bogenförmig an einem Rand der Sensormembran 16 entlanglaufen Verteilersteg 19, von dem eine Mehrzahl von Elektrodenfingern 20 abstehen. Der besseren Erkennbarkeit wegen weisen der Verteilersteg 19 und die Elektrodenfinger 20 in Fig. 2 und 3 jeweils eine lockere, von links nach rechts abfallende Schraffur auf.

Weitere der oben erwähnten Teile sind ein zweiter bogenförmiger Verteilersteg 21, der dem Verteilersteg 19 an einem entgegengesetzten Rand der Sensormembran 16 gegenüber liegt, und Elektrodenfinger 22, die dem Verteilersteg 21 zugeordnet, aber mit ihm nicht materialschlüssig, sondern über einen ohmschen Widerstand 23, hier einen einerseits am Verteilersteg 21 und andererseits an einem der Elektrodenfinger 22 verlöteten SMD-Widerstand, verbunden sind. Die Elektrodenfinger 22 erstrecken sich jeweils zweien der Elektrodenfinger 20 und begrenzen mit diesen eine Mehrzahl von spaltförmigen Durchgängen 24. In der Darstellung der Fig. 2 weisen diese Durchgänge 24 jeweils einen wellenförmigen Verlauf auf; andere Verläufe, die es erlauben, bei geringer Breite des spaltförmigen Durchgangs 24 eine große freie Querschnittsfläche auf einer kompakt geformten Sensormembran 16 unterzubringen, wie ein zickzack- oder rechteckiger Verlauf, Mäander oder dergleichen, kommen ebenfalls in Betracht.

Die Breite der Durchgänge 24 ist so bemessen, dass Metallspäne, die in der Pumpe 1 oder dem Hydraulikmotor 3 in Betrieb entstehen und vom Hydrauliköl mitgespült werden, einigermaßen zuverlässig an der Sensormembran 16 hängen bleiben, während feiner, staubartiger Abrieb die Durchgänge 24 ungehindert passieren darf, um anschließend im Filterkörper 17 abgefangen zu werden. Indem auf diese Weise im Wesentlichen nur grobe Partikel an der Sensormembran 16 abgefangen werden, können, wie im Folgenden noch deutlicher wird, Situationen zuverlässig erkannt werden, in denen ein makroskopischer Schaden in der Pumpe 1 oder im Hydraulikmotor 3 in Entstehung begriffen ist. Indem solche Situationen zuverlässig erkannt werden, kann eine Reparatur veranlasst werden, bevor umfangreiche, nur mit hohem Aufwand zu behebende Schäden aufgetreten sind. Hierfür hat sich eine lichte Weite der Durchgänge 24 von 1,2 mm als zweckmäßig erwiesen.

Die diversen Teile 18, 21, 22 der Sensormembran 16 sind auf einem elektrisch nicht leitenden Trägerring 25 befestigt. Die Verteilerstege 19, 21 liegen vollflächig auf dem Trägerring 25 auf und sind an diesem befestigt, z.B. durch Verklebung. Erste Enden der Elektrodenfinger 20 hängen mit dem Verteilersteg 19 einteilig zusammen. Entgegengesetzte zweite Enden 26 der Elektrodenfinger 20 sind jeweils an einem dem Verteilersteg 19 gegenüberliegenden Bereich des Trägerrings 25 verklebt oder anderweitig befestigt. Die Elektrodenfinger 22 haben dem Verteilersteg 21 zugewandte erste Enden 27, die auf dem Trägerring 25 aufliegen und an diesem ebenfalls verklebt sein können oder lediglich über die Widerstände 23 am Verteilersteg 21 befestigt sind.

Die Vorrichtung 8 umfasst ferner, wie wiederum in Fig. 1 zu sehen, eine Auswerteschaltung 28, die mit beiden Verteilerstegen 19, 21 verbunden ist, um an diesen eine Messspannung von z.B. 12 V anzulegen. Solange die Sensormembran 16 nicht mit Abriebpartikeln belastet ist, sind die beiden Verteilerstege 19, 21 gegeneinander elektrisch isoliert, und es fließt kein Strom. Wenn im Betrieb ein erster Span 29 an der Sensormembran 16 hängen geblieben ist und dabei einen Durchgang 24 zwischen zwei Elektrodenfingern 20, 22 überbrückt, dann fließt über diesen Span 29 ein Strom, der von der Auswerteschaltung 28 erfasst wird. Setzt sich ein zweiter Span 30 in Kontakt mit demselben Elektrodenfinger 22 ab, dann führt dies nicht zu einer Verstärkung des Stromflusses, da die Stromstärke durch den Widerstand 23 des betreffenden Elektrodenfingers 22 begrenzt ist. Setzt sich hingegen ein weiterer Span 31 in Kontakt mit einem anderen Elektrodenfinger 22 ab, dann kann über dessen Widerstand 23 zusätzlicher Strom fließen, sodass der Gesamtstromfluss über die Sensormembran 16 zunimmt. Wenn man die Auswirkungen von Kontaktwiderständen zwischen den Spänen und den Elektrodenfingern außer Betracht lässt, kann man sagen, dass der Stromfluss über die Sensormembran 16 so viele diskrete Werte annehmen kann, wie Widerstände 23 vorhanden sind.

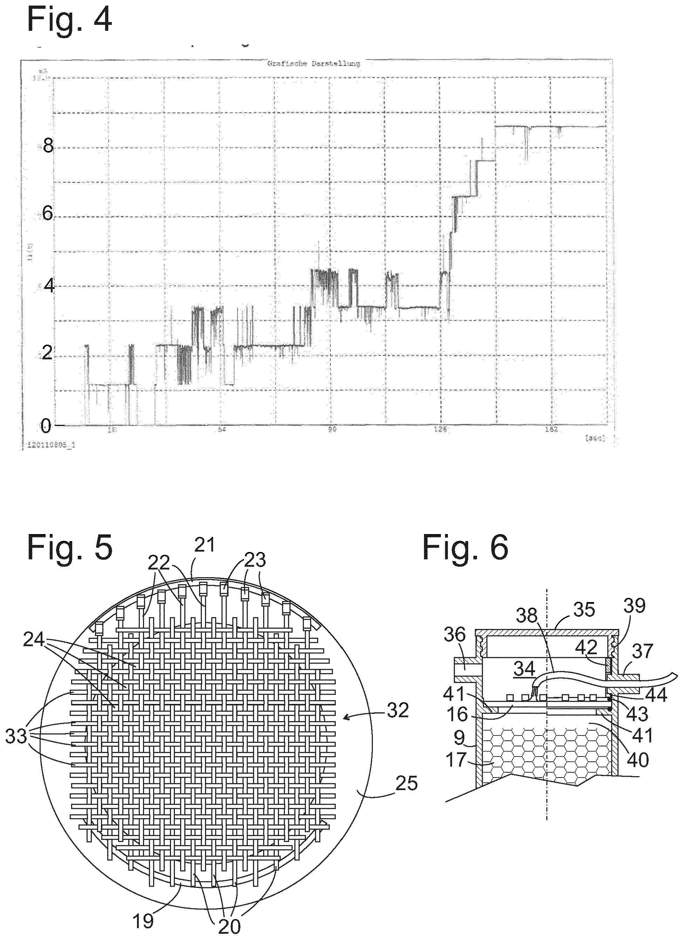

Fig. 4 zeigt exemplarisch den zeitlichen Verlauf der über die Sensormembran 16 fließenden Stromstärke, während gleichzeitig ein partikelbelasteter Ölstrom hindurchfließt. Bei einer angelegten Spannung von 12 V und einem Widerstandswert der Widerstände 23 von 10 kΩ, würde die Stromstärke in Schritten von 1,2 mA zunehmen, wenn der ohmsche Widerstand der Späne und der Kontaktwiderstand zwischen ihnen und den Elektrodenfingern vernachlässigbar wäre. In der Praxis ist die Schrittweite, mit der sich die Stromstärke ändert, etwas kleiner und erreicht schließlich einen Sättigungswert von ca. 8,7 mA, wenn über alle acht Widerstände 23 Strom fließt. Ein Grenzwert der Stromstärke, bei dessen Überschreitung die Auswerteschaltung 28 ein auf einen bevorstehenden Maschinenschaden hinweisendes Warnsignal ausgibt, sollte daher passend niedriger gewählt sein, z.B. entsprechend einem Stromfluss über die Hälfte oder zwei Drittel der vorhandenen Widerstände 23.

Wie an Fig. 4 deutlich zu erkennen ist, steigt die Stromstärke nicht monoton im Laufe der Zeit. Es gibt Zeitspannen, in denen die Stromstärke schnell zwischen zwei Stufen schwankt, was vermutlich auf einen unsicheren Kontakt eines Spans mit den Elektrodenfingern zurückzuführen ist. Darüber hinaus kann es auch zu einem länger anhaltenden Abfall des Stroms führen, was darauf zurückzuführen sein kann, dass ein Span durch einen der Durchgänge 24 hindurchgespült worden ist. Die Auswerteschaltung 28 kann auch solche durchgespülten Partikel bei der Entscheidung, ob ein Warnsignal erzeugt werden soll oder nicht, berücksichtigen, indem sie an der gemessenen Stromstärke eine Tiefpassfilterung vornimmt, um die oben erläuterten, auf einen unsicheren Kontakt zurückzuführenden schnellen Schwankungen zu unterdrücken und jedes Mal, wenn die tiefpassgefilterte Stromstärke um einen Schritt ansteigt, einen Zähler inkrementiert. Der Inhalt des Zählers liefert dann einen Schätzwert für die Zahl der im Laufe der Zeit aufgefangenen Späne, so dass, wenn dieser Zählwert einen vorgegebenen Grenzwert überschreitet, das Warnsignal erzeugt wird.

Fig. 5 zeigt in einer zu Fig. 2 analogen Draufsicht eine Sensormembran 16 gemäß einer zweiten Ausgestaltung der Erfindung. Auf dem Trägerring 25 ist ein Gewebe 32 befestigt, das aus sich in einer ersten Richtung erstreckenden metallischen Fäden und diese kreuzenden nichtleitenden Fäden besteht. Die metallischen Fäden bilden Elektrodenfinger analog denen der Fig. 2 und sind dementsprechend mit 20 bzw. 22 bezeichnet. Die Fäden bzw. Elektrodenfinger 20 sind an einem Verteilersteg 19 verlötet; die Fäden bzw. Elektrodenfinger 22 sind mit dem gegenüberliegenden Verteilersteg 21 über Widerstände 23 verbunden. Die nichtleitenden Fäden 33 fixieren die metallischen Fäden 20, 22 in Bezug zueinander, sodass sie von hindurchströmendem Öl nicht zu Schwingungen angeregt werden können und die Abmessungen der Durchgänge 24 zwischen ihnen konstant bleiben. So bleiben aufgefangene Späne mit hoher Wahrscheinlichkeit dauerhaft an der Membran 16 hängen. Die Wirkungsweise der Sensormembran 16 aus Fig. 5 ist dieselbe wie mit Bezug auf Fig. 2 bis 4 beschrieben.

Fig. 6 zeigt einen schematischen partiellen Schnitt durch das Filtergehäuse 9. Das Filtergehäuse hat einen stromaufwärtigen Hohlraum 34, der über einen abnehmbaren Deckel 35 von außen zugänglich ist. Dem Deckel 35 gegenüber bildet die Sensormembran 16 einen Boden des Hohlraums 34. Die Leckölleitung 12, 13 erreicht den Hohlraum 34 über einen Stutzen 36 an einer Seitenwand des Gehäuses 9. Des Weiteren erstreckt sich durch die Seitenwand eine Durchführung 37 für ein Kabel 38, das die Sensormembran 16 mit Spannung versorgt.

Bei der hier betrachteten Ausgestaltung sind Gehäuse 9 und Deckel 35 mit ineinandergreifenden Gewinden versehen, die den Deckel 35 am Gehäuse 9 fixieren. Im vorliegenden Fall ist der Hohlraum 36 zylindrisch, um ein Außengewinde 39 des Deckels 35 aufnehmen zu können.

Die Höhe des Hohlraums 34 ist geringer als sein Durchmesser, so dass von dem Lecköl mitgeführte Späne, die an der Sensormembran 16 hängenbleiben, nach Öffnen des Deckels 35 leicht erreichbar sind und mit einer Pinzette oder durch Abwischen der Membran 16 mit einem Tuch entfernt werden können. Anhand des Materials, aus dem die Späne bestehen, kann ein erfahrener Anwender auf deren möglichen Ursprungsort in der Pumpe 1 oder dem Hydraulikmotor 3 rückschließen, um basierend auf dieser Kenntnis zu entscheiden, ob ein Reparatureingriff durchgeführt werden sollte, bzw. diesen ggf. schnell und effizient durchführen zu können.

Einer ersten, in der linken Hälfte von Fig. 6 dargestellten Ausgestaltung zufolge ist die Sensormembran 16 im Gehäuse 9 der Fig. 6 auf einem von der Außenwand des Gehäuses 9 ins Innere vorspringenden Steg 41 abgestützt und an der Außenwand durch Pressung fixiert.

Andere Befestigungsmöglichkeiten kommen in Betracht, wenn gewünscht ist, die Sensormembran 16 ausbauen zu können, sei es um sie zu reinigen, oder um einen zweiten, stromabwärtigen Hohlraum 40 des Filtergehäuses 9 zugänglich zu machen, und so den darin untergebrachten Filterkörper 17 austauschen zu können. So kann z.B., wie im rechten Teil von Fig. 6 gezeigt, eine Hülse 42 drehfest im Hohlraum 34 aufgenommen sein, die, wenn der Deckel 35 eingeschraubt ist, Druck des Deckels 35 über einen eingeklemmten Dichtring 43 auf die Sensormembran 16 überträgt und sie so fest gegen den Steg 41 gedrückt hält. Um die Hülse 42 drehfest zu fixieren, kann diese einen Schlitz 44 aufweisen, der einen einwärts gerichteten Vorsprung des Gehäuses, hier einen überstehenden Abschnitt der Durchführung 37, umgreift. Wenn der Deckel 35 entfernt ist, liegt die Sensormembran 16 locker auf dem Steg 41 auf und kann bequem entnommen werden.

Alternativ kann, um einen Zugriff auf den Filterkörper 17 zu ermöglichen, der Hohlraum 40 einen eigenen, in Fig. 6 nicht gezeigten Deckel haben, der beispielsweise spiegelbildlich zu dem Deckel 15 an ein gegenüberliegendes Stirnende des rohrförmigen Gehäuses 9 angeschraubt sein kann.

### Bezugszeichen

- 1: Pumpe
- 2: Welle
- 3: Hydraulikmotor
- 4: Ölleitung
- 5: Ölleitung
- 6: Hydraulikkreis
- 7: Welle
- 8: Vorrichtung
- 9: Filtergehäuse
- 10: Einlassanschluss
- 11: Auslassanschluss
- 12: Leckölleitung
- 13: Leckölleitung
- 14: Tank
- 16: Sensormembran
- 17: Filterkörper
- 18: Teil
- 19: Verteilersteg
- 20: Elektrodenfinger
- 21: Verteilersteg
- 22: Elektrodenfinger
- 23: Widerstand
- 24: Durchgang
- 25: Trägerring
- 26: distales Ende
- 27: proximales Ende
- 28: Auswerteschaltung
- 29: Span
- 30: Span
- 31: Span
- 32: Gewebe
- 33: Faden
- 34: Hohlraum
- 35: Deckel
- 36: Stutzen
- 37: Durchführung
- 38: Kabel
- 39: Außengewinde
- 40: Hohlraum
- 41: Steg
- 42: Hülse
- 43: Dichtring
- 44: Schlitz

## Patentansprüche

1. Vorrichtung zur Überwachung der Qualität eines Hydraulikmediums, mit einem das Hydraulikmedium führenden Kanal und einer in dem Kanal angeordneten Sensormembran (16), die wenigstens einen von in dem Kanal zirkulierendem Hydraulikmedium durchströmten Durchgang (24) aufweist, **dadurch gekennzeichnet, dass** die Sensormembran (16) den Durchgang (24) begrenzende, mit unterschiedlichen elektrischen Potentialen beschaltbare Elektroden (19, 20; 21, 22) umfasst.

2. Vorrichtung nach Anspruch 1, **dadurch gekennzeichnet, dass** der Abstand zwischen den Elektroden (19, 20; 21, 22) am Durchgang (24) wenigstens 0,3 mm und/oder höchstens 1,5 mm beträgt.

3. Vorrichtung nach Anspruch 2, **dadurch gekennzeichnet, dass** der Durchgang (24) ein Spalt, insbesondere mit einem wellen- oder mäanderförmigen Verlauf, ist.

4. Vorrichtung nach Anspruch 1, 2, oder 3, **dadurch gekennzeichnet, dass** wenigstens eine der Elektroden (19, 20; 21, 22) eine kammartige Struktur mit einer Mehrzahl von sich nebeneinander erstreckenden Elektrodenfingern (20, 22) aufweist.

5. Vorrichtung nach Anspruch 4, **dadurch gekennzeichnet, dass** die Elektrodenfinger (20) mit einem Verteilersteg (19) einteilig leitend verbunden sind.

6. Vorrichtung nach Anspruch 4, **dadurch gekennzeichnet, dass** jeder Elektrodenfinger (22) mit einem Verteilersteg (21) über einen Vorwiderstand (23) verbunden ist.

7. Vorrichtung nach Anspruch 6, **dadurch gekennzeichnet, dass** der Vorwiderstand (23) einen Widerstandswert von wenigstens 1kΩ aufweist.

8. Vorrichtung nach Anspruch 6 oder 7, **dadurch gekennzeichnet, dass** die Zahl der Vorwiderstände (23) wenigstens drei beträgt.

9. Vorrichtung nach einem der Ansprüche 5 bis 8, **dadurch gekennzeichnet, dass** vom Verteilersteg (19; 21) abgewandte Enden (26) der Elektrodenfinger (20, 22) an einer Fassung der Sensormembran (16) fixiert sind.

10. Vorrichtung nach Anspruch 9, **dadurch gekennzeichnet, dass** die Fassung einen elektrisch isolierenden Trägerring (25) umfasst, durch den hindurch der Kanal verläuft, und dass Enden (26, 27) der Elektrodenfinger (20, 22) an dem Trägerring (25) fixiert sind.

11. Vorrichtung nach einem der vorhergehenden Ansprüche, ferner mit einer Spannungsquelle zum Anlegen einer Betriebsspannung an die Sensormembran und einer Messschaltung (28) zum Erfassen eines Stromflusses über die Sensormembran (16).

12. Vorrichtung nach Anspruch 11, **dadurch gekennzeichnet, dass** die Messschaltung (28) eingerichtet ist, ein Warnsignal zu erzeugen, wenn der Stromfluss über die Sensormembran (16) einen Grenzwert übersteigt, oder Anstiege des Stromflusses über die Sensormembran (16) zu zählen und ein Warnsignal zu erzeugen, wenn der Zählwert einen Grenzwert übersteigt.

13. Vorrichtung nach einem der vorhergehenden Ansprüche, **dadurch gekennzeichnet, dass** der Kanal einen stromabwärts von der Sensormembran (16) angeordneten Partikelfilter (17) aufweist.

14. Vorrichtung nach einem der vorhergehenden Ansprüche, **dadurch gekennzeichnet, dass** die Sensormembran (16) in einem Gehäuse (9) untergebracht ist und dass das Gehäuse (9) wenigstens einen Deckel (35) aufweist, über den wenigstens eine stromaufwärtige Seite der Sensormembran (16) zugänglich ist.

15. Hydraulisches Aggregat, insbesondere Antriebsaggregat eines landwirtschaftlichen Fahrzeugs, mit einer Pumpe (1) und einem von der Pumpe angetriebenen Hydraulikmotor (3), **dadurch gekennzeichnet, dass** eine Vorrichtung (8) nach einem der vorhergehenden Ansprüche in einem die Pumpe (1) mit dem Hydraulikmotor (3) verbindenden Hydraulikkreis (6), vorzugsweise in einer Leckölleitung der Pumpe (1) und/oder des Hydraulikmotors (3), angeordnet ist.

## Claims

1. Apparatus for monitoring the quality of a hydraulic medium comprising a passage carrying the hydraulic medium and a sensor diaphragm (16) which is arranged in the passage and which has at least one through opening (24) through which the hydraulic medium circulating in the passage flows, **characterised in that** the sensor diaphragm (16) includes electrodes (19, 20; 21, 22) which delimit the through opening (24) and which are switchable at different electrical potentials.

2. Apparatus according to claim 1 **characterised in that** the spacing between the electrodes (19, 20; 21, 22) at the through opening (24) is at least 0.3 mm and/or at most 1.5 mm.

3. Apparatus according to claim 2 **characterised in that** the through opening (24) is a gap, in particular of a wave-shaped or meander-shaped configuration.

4. Apparatus according to claim 1, claim 2 or claim 3 **characterised in that** at least one of the electrodes (19, 20; 21, 22) has a comb-like structure having a plurality of electrode fingers (20, 22) extending in mutually juxtaposed relationship.

5. Apparatus according to claim 4 **characterised in that** the electrode fingers (20) are integrally conductively connected to a distributor leg (19).

6. Apparatus according to claim 4 **characterised in that** each electrode finger (22) is connected to a distributor leg (21) by way of a series resistor (23).

7. Apparatus according to claim 6 **characterised in that** the series resistor (23) has a resistance value of at least 1kΩ.

8. Apparatus according to claim 6 or claim 7 **characterised in that** the number of series resistors (23) is at least three.

9. Apparatus according to one of claims 5 to 8 **characterised in that** ends (26) of the electrode fingers (20, 22), that are remote from the distributor leg (19; 21) are fixed to a holding means of the sensor diaphragm (16).

10. Apparatus according to claim 9 **characterised in that** the holding means includes an electrically insulating carrier ring (25) through which the passage extends and that ends (26, 27) of the electrode fingers (20, 22) are fixed to the carrier ring (25).

11. Apparatus according to one of the preceding claims and further comprising a voltage source for applying an operating voltage to the sensor diaphragm and a measuring circuit (28) for detecting a current flow by way of the sensor diaphragm (16).

12. Apparatus according to claim 11 **characterised in that** the measuring circuit (28) is adapted to produce a warning signal if the current flow by way of the sensor diaphragm (16) exceeds a limit value or to count rises in the current flow by way of the sensor diaphragm (16) and to produce a warning signal if the count value exceeds a limit value.

13. Apparatus according to one of the preceding claims **characterised in that** the passage has a particle filter (17) arranged downstream of the sensor diaphragm (16).

14. Apparatus according to one of the preceding claims **characterised in that** the sensor diaphragm (16) is disposed in a housing (9) and that the housing (9) has at least one cover (35), by way of which at least an upstream side of the sensor diaphragm (16) is accessible.

15. A hydraulic assembly, in particular a drive assembly of an agricultural vehicle, comprising a pump (1) and a hydraulic motor (3) driven by the pump, **characterised in that** an apparatus (8) according to one of the preceding claims is arranged in a hydraulic circuit (6) connecting the pump (1) to the hydraulic motor (3), preferably in a leak oil line of the pump (1) and/or of the hydraulic motor (3).

## Revendications

1. Dispositif de surveillance de la qualité d'un agent hydraulique, comprenant un canal conduisant l'agent hydraulique et une membrane détectrice (16) qui est disposée dans le canal et qui comporte au moins un passage (24) parcouru par l'agent hydraulique circulant dans le canal, **caractérisé en ce que** la membrane détectrice (16) comporte des électrodes (19, 20 ; 21, 22) qui délimitent le passage (24) et qui sont connectables à différents potentiels électriques.

2. Dispositif selon la revendication 1, **caractérisé en ce que** l'écartement entre les électrodes (19, 20 ; 21, 22) au niveau du passage (24) est au minimum de 0,3 mm et/ou au maximum de 1,5 mm.

3. Dispositif selon la revendication 2, **caractérisé en ce que** le passage (24) est un interstice, en particulier à tracé ondulé ou en forme de méandres.

4. Dispositif selon la revendication 1, 2 ou 3, **caractérisé en ce qu'**au moins une des électrodes (19, 20 ; 21, 22) présente une structure en peigne avec une pluralité de doigts d'électrodes (20, 22) s'étendant les uns à côté des autres.

5. Dispositif selon la revendication 4, **caractérisé en ce que** les doigts d'électrodes (20) sont reliés de manière monobloc et conductrice à un rebord répartiteur (19).

6. Dispositif selon la revendication 4, **caractérisé en ce que** chaque doigt d'électrode (22) est relié au rebord répartiteur (21) par l'intermédiaire d'une prérésistance (23).

7. Dispositif selon la revendication 6, **caractérisé en ce que** la prérésistance (23) présente une valeur de résistance d'au moins 1 k**Ω**.

8. Dispositif selon la revendication 6 ou 7, **caractérisé en ce que** le nombre de prérésistances (23) est d'au moins trois.

9. Dispositif selon une des revendications 5 à 8, **caractérisé en ce que** des extrémités (26) des doigts d'électrodes (20, 22) situées à l'opposé du rebord répartiteur (19 ; 21) sont fixées à une monture de la membrane détectrice (16).

10. Dispositif selon la revendication 9, **caractérisé en ce que** la monture comprend un anneau porteur électriquement isolant (25) que traverse le canal, et **en ce que** des extrémités (26, 27) des doigts d'électrodes (20, 22) sont fixées à l'anneau porteur (25).

11. Dispositif selon une des revendications précédentes, comprenant également une source de tension pour appliquer une tension d'alimentation à la membrane détectrice et comprenant un circuit de mesure (28) pour détecter un flux de courant traversant la membrane détectrice (16).

12. Dispositif selon la revendication 11, **caractérisé en ce que** le circuit de mesure (28) est conçu pour générer un signal d'avertissement quand le flux de courant traversant la membrane détectrice (16) excède une valeur limite, ou pour compter les élévations du flux de courant à travers la membrane détectrice (16) et pour générer un signal d'avertissement quand la valeur de comptage excède une valeur limite.

13. Dispositif selon une des revendications précédentes, **caractérisé en ce que** le canal comporte un filtre à particules (17) disposé en aval de la membrane détectrice (16).

14. Dispositif selon une des revendications précédentes, **caractérisé en ce que** la membrane détectrice (16) est logée dans un boîtier (9), et **en ce que** le boîtier (9) comporte au moins un couvercle (35) par l'intermédiaire duquel le au moins un côté amont de la membrane détectrice (16) est accessible.

15. Organe hydraulique, en particulier organe d'entraînement d'un véhicule agricole, comprenant une pompe (1) et un moteur hydraulique (3) entraîné par la pompe, **caractérisé en ce qu'**un dispositif (8) selon une des revendications précédentes est disposé dans un circuit hydraulique (6) reliant la pompe (1) au moteur hydraulique (3), de préférence dans une conduite d'huile de fuite de la pompe (1) et/ou du moteur hydraulique (3).
